# EUROPÄISCHE PATENTSCHRIFT

(11) **EP 1 345 097 B1**
(45) Veröffentlichungstag und Bekanntmachung des Hinweises auf die Patenterteilung: **15.11.2006**
(21) Anmeldenummer: 02005794.9
(22) Anmeldetag: 14.03.2002
(51) Int. Cl.: G05B 15/02

(54) **Verfahren und Einrichtung zur Generierung einer Bediensicht zu einem Gebäudeleitsystem**
Method and device for creating a control-layer in a building automation system
Procédé et dispositif de génération d'une couche de commande dans un système de contrôle de batiment

(43) Veröffentlichungstag der Anmeldung: 17.09.2003
(73) Patentinhaber: Siemens Schweiz AG, 8047 Zürich (CH)
(72) Erfinder: Nold, Heinrich, 8755 Ennenda (CH)
(74) Vertreter: Weise, Wolfgang

(56) Entgegenhaltungen:
- WO-A-01/95041
- WO-A-94/16400
- US-A- 5 805 442

## Beschreibung

Die Erfindung bezieht sich auf ein Verfahren zur Generierung einer Bediensicht zu einem Gebäudeleitsystem gemäss den Merkmalen des Anspruchs 1.

Solche Verfahren eignen sich beispielsweise zur Überwachung und Bedienung einer betriebstechnischen Anlage eines Gebäudes. Das vorgeschlagene Verfahren bzw. die vorgeschlagene Einrichtung sind vorteilhafterweise Funktionen beziehungsweise Teile einer Einrichtung zur Steuerung und/oder Regelung von Prozessgrössen in komplexen technischen Systemen, wobei beispielhaft Heizungs-, Lüftungs- und Klimaanlagen, Zutritts- und Feuerüberwachungssysteme oder allgemein Gebäudeautomatisationsanlagen - die auch als Gebäudeleitsysteme bezeichnet werden - genannt seien, in welchen insbesondere auch Raumklimagrössen beeinflusst werden. In einer Gebäudeautomatisationsanlage sind in der Regel eine Vielzahl sogenannter Feldgeräte wie Sensoren und Stellglieder zu überwachen und zu bedienen.

Grundsätzlich können mit einer Gebäudeautomatisationsanlage einzelne Gebäude oder mehrere Gebäude oder Gebäudegruppen bedient und überwacht werden. In der Regel stellen Gebäudeautomatisationsanlagen mehrere grafische Bedienoberflächen zur Verfügung, in denen beispielsweise ein Anlagenschema oder der Grundriss eines Gebäudes oder eines Stockwerks mit installierten Feldgeräten dargestellt ist. Eine grafische Bedienoberfläche für ein Gebäudeleitsystem ist beispielsweise auch aus EP 678 204A bekannt.

Für gewisse Überwachungsaufgaben sind nun aber die in der Gebäudeautomatisationsanlage standardmässig verfügbaren Bediensichten zu umfassend oder gar ungeeignet. Es ist daher vorteilhaft, wenn Service-Personal je nach Kompetenz und Auftrag geeignete - sozusagen massgeschneiderte - Bediensichten direkt mit der Gebäudeautomatisationsanlage generieren kann.

Der Erfindung liegt die Aufgabe zugrunde, ein Verfahren vorzuschlagen, mit dem eine geeignete grafische Bedienoberfläche für ein Gebäudeleitsystem generiert wird, und auch eine Einrichtung zu schaffen, mit der das Verfahren ausführbar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: den prinzipiellen Aufbau einer eine Bediensicht aufweisenden Anordnung zur Überwachung, Steuerung und/oder Regelung einer betriebstechnischen Anlage eines Gebäudes,
- Fig. 1a: eine Variante der Anordnung,
- Fig. 2: ein Datenflussdiagramm zur Generierung und zur Benutzung einer neuen Bediensicht der betriebstechnischen Anlage,
- Fig. 3: eine erste Fensterdarstellung zur Erläuterung von Verfahrensschritten, insbesondere eines ersten Verfahrensschrittes zur Generierung der neuen Bediensicht,
- Fig. 4: eine zweite Fensterdarstellung zur Erläuterung von Verfahrensschritten, insbesondere eines zweiten Verfahrensschrittes zur Generierung der Bediensicht,
- Fig. 5: eine dritte Fensterdarstellung zur Erläuterung von Verfahrensschritten, insbesondere eines dritten Verfahrensschrittes zur Generierung der Bediensicht,
- Fig. 6: eine vierte Fensterdarstellung zur Erläuterung von Verfahrensschritten, insbesondere des dritten Verfahrensschrittes zur Generierung der Bediensicht,
- Fig. 7: eine fünfte Fensterdarstellung zur Erläuterung von Verfahrensschritten, insbesondere eines vierten Verfahrensschrittes zur Generierung der Bediensicht, und
- Fig. 8: eine sechste Fensterdarstellung mit der beispielhaften Bediensicht gemäss der Erfindung.

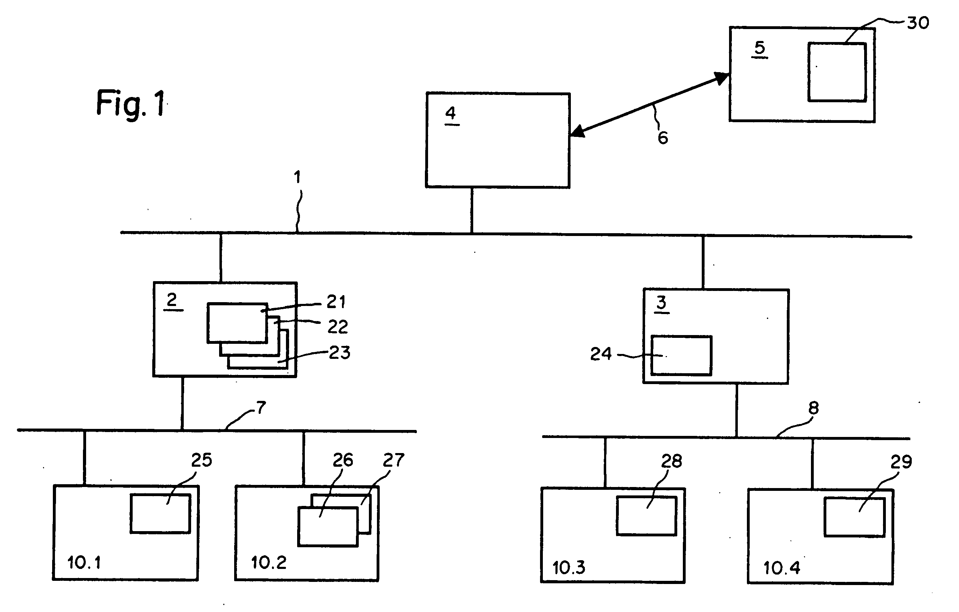

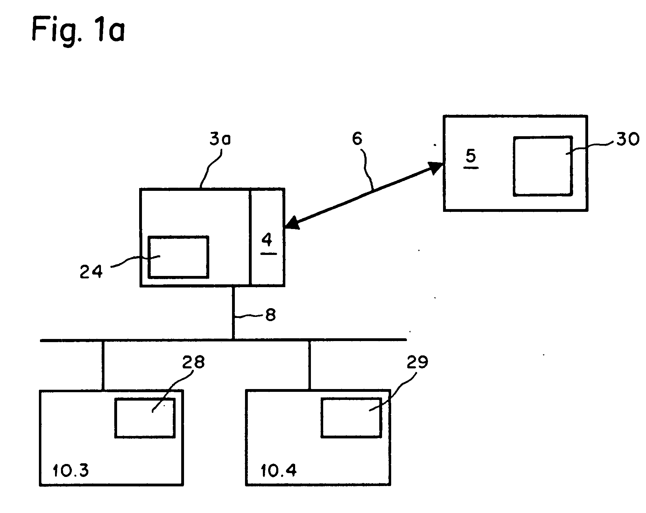

In der Fig. 1 bedeutet 1 eine Kommunikationseinrichtung zur Verbindung von Einheiten 2, 3 und 4 einer Einrichtung zur Überwachung, Steuerung und/oder Regelung einer betriebstechnischen Anlage für ein oder mehrere Gebäude.

Es versteht sich von selbst, dass in dem hier dargestellten Beispiel nur Einheiten dargestellt sind, welche zur Beschreibung der Erfindung in ihrem Umfeld notwendig sind und eine reelle Einrichtung zur Überwachung, Steuerung und/oder Regelung einer betriebstechnischen Anlage in der Regel noch weitere Einheiten aufweist. Die Struktur der reellen Einrichtung kann hierarchisch durchaus auch tiefer oder weniger tief verschachtelt sein, das heisst, dass eine Ebene von Steuereinheiten ihrerseits von einer übergeordneten Steuereinheit gesteuert sein kann und dass mehrere Ebenen existieren können. Daten über den Aufbau der Anlage und über Adressen von Komponenten sind nicht zwingend zentral gespeichert, sondern können in mehreren, in den Netzen verteilt angeordneten Server-Einrichtungen abgespeichert sein.

Die Kommunikationseinrichtung 1 ist grundsätzlich ein privates oder öffentliches Datenkommunikationsnetz, welches für den Datenaustausch zwischen einzelnen Einheiten der betriebstechnischen Anlage geeignet ist.

Zur Implementierung der Kommunikationseinrichtung 1 einsetzbare Bussysteme und Technologien oder Standards sind beispielsweise Ethernet der Firma Xerox, LON oder LonWorks® der Firma ECHELON, der Europäische Installationsbus EIB oder der nach deutscher Norm DIN 19245 definierte PROFIBUS. Grundsätzlich sind anstelle des Bussystems oder in Ergänzung dazu auch optische Datenkommunikationskanäle oder ein Funknetz einsetzbar, beispielsweise ein Glasfasernetz oder ein zellulares Telefonnetz, wie etwa GSM oder UMTS. Bei Bedarf ist die betriebstechnische Anlage auch mit dem Internet verbunden.

Beispielhaft sind eine erste Einheit 2 und eine zweite Einheit 3 je ein Regel- und/oder Steuergerät. Eine dritte Einheit ist eine Server-Einrichtung 4. Eine Client-Einrichtung 5 ist über einen Kommunikationskanal 6 mit der Server-Einrichtung 4 verbunden.

Typischerweise sind die Regel- und/oder Steuergeräte 2 und 3 über weitere Kommunikationseinrichtungen 7 oder 8 mit Feldgeräten 10 verbunden.

Ein Feldgerät 10 ist typischerweise ein Fühler oder ein Stellglied oder auch eine Kombination eines Fühlers und eines Stellglieds.

Beispielhaft ist die erste Einheit 2 des Regel- und/oder Steuergeräts über eine erste lokale Kommunikationseinrichtung 7 mit einem Temperaturfühler 10.1 und einem Ventilantrieb 10.2 verbunden, während die zweite Einheit 3 des Regel- und/oder Steuergeräts über eine zweite lokale Kommunikationseinrichtung 8 mit einem Feuchtefühler 10.3 und einem Klappenantrieb 10.4 verbunden ist.

Betriebstechnische Anlagen weisen eine Vielzahl so genannter Datenpunkte auf. Datenpunkte sind adressierbare Informationseinheiten, an die Datensignale ausgegeben oder von denen Datensignale gelesen werden. Ein Gerät oder eine Funktionseinheit eines Geräts ist für andere Funktionseinheiten - beispielsweise eine Bedieneinheit oder eine Leitstelle - durch wenigstens einen Datenpunkt darstellbar. Damit ist das Gerät oder die Funktionseinheit des Geräts - beispielsweise von einer Leitstelle oder einer Server-Einrichtung aus - über seinen Datenpunkt oder seine Datenpunkte ansprechbar oder auch steuerbar. Softwaremässig ist ein Datenpunkt eine Variable, die von ihrem Datentyp her einfach oder strukturiert sein kann.

Im dargestellten Anlagenbeispiel weist die erste Einheit 2 des Regel- und/oder Steuergeräts einen ersten Datenpunkt 21, einen zweiten Datenpunkt 22 und einen dritten Datenpunkt 23 auf, während die zweite Einheit 3 einen vierten Datenpunkt 24 aufweist. Ferner hat der Temperaturfühler 10.1 einen fünften Datenpunkt 25, der Ventilantrieb 10.2 einen sechsten Datenpunkt 26 und einen siebten Datenpunkt 27, der Feuchtefühler 10.3 einen achten Datenpunkt 28 und schliesslich der Klappenantrieb 10.4 eine neunten Datenpunkt 29.

Die Client-Einrichtung 5 und die Server-Einrichtung 4 bilden zusammen ein sogenanntes Client-Server-System, in welchem die Client-Einrichtung 5 insbesondere für die Darstellung einer Bediensicht 30 zuständig ist, während die Server-Einrichtung 4 im Wesentlichen die Daten für die Bediensicht 30 bereitstellt.

Die Bediensicht 30 ist eine graphische Benutzerschnittstelle, die vorteilhafterweise in einer in der Server-Einrichtung 4 abgespeicherten Datei beschrieben ist. Eine vorteilhafte Ausführung der Erfindung ist erreichbar, wenn die Bediensicht 30 durch eine in HTML (HyperText Markup Language) geschriebene Datei beschrieben ist, wobei die Datei in der Regel Querverweise auf weitere - vorteilhafterweise in der Server-Einrichtung abgespeicherte - Dateien aufweist, welche ihrerseits HTML-Code oder JavaScript oder auch ein Java Applet aufweisen.

Die in der Server-Einrichtung 5 abgespeicherte Datei, mit der die neue Bediensicht festgelegt ist, muss nicht zwingend ein HTML-Dokument sein; HTML ist zur Zeit lediglich die Beschreibungssprache zur Darstellung von Grafikseiten mittels logischen Markierungen, welche für standardisierte Web-Browser-Programme bevorzugt einsetzbar ist. Grundsätzlich könnte auch eine andere Sprache zur Beschreibung der Bediensicht eingesetzt werden. Es ist jedoch ein wesentlicher Vorteil der Erfindung, dass die Bediensicht mit einem wohlbekannten Interpretierprogramm darstellbar ist, nämlich einem allgemein bekannten Web-Browserprogramm.

Die Client-Einrichtung 5 ist typischerweise ein sogenannter Web Client oder World Wide Web Client, also eine Hardware-Plattform mit einem lauffähigen Web Browser Programm, einer Datenschnittstelle, einem Grafik-Display und Eingabemitteln.

Vorzugsweise ist die Client-Einrichtung 5 durch einen kostengünstigen Personalcomputer, ein sogenanntes Notebook oder Handheld implementiert, beispielsweise durch einen SIMpad der Firma Siemens oder einen M500 der Firma Palm. Die Interpretieraktivität 39 ist vorteilhafterweise ein so genanntes Web-BrowserProgramm, welches in HTML (HyperText Markup Language) geschriebene Dokumente ausführt und auf dem Ein-/Ausgabeterminal 38 wiedergibt.

Die Server-Einrichtung 4 ist ein Computer, der typischerweise ohne eigenes Bedienerterminal auskommt und der vorteilhafterweise als sogenanntes Embedded-Device implementiert ist.

Grundsätzlich könnten die Server-Einrichtung 4 und die Client-Einrichtung 5 jedoch auch in einem einzigen Rechner implementiert sein. Der Kommunikationskanal 6 ist eine verdrahtete oder eine drahtlose Verbindung. In einem vorteilhaften Ausführungsbeispiel ist der Kommunikationskanal 6 eine sogenannte Bluetooth-Verbindung oder die Kombination von einer Bluetooth-Verbindung zwischen der Client-Einrichtung 5 und einem Mobiltelefon und einer GSM-Verbindung zwischen dem Mobiltelefon und der Server-Einrichtung 4.

Das Client-Server-System 4 und 5 ist durchaus auch in sehr einfachen betriebstechnischen Anlagen einsetzbar und kann beispielsweise auch in betriebstechnischen Anlagen ohne Datennetzwerk implementiert sein.

Fig. 1a zeigt eine einfache Anordnung zur Überwachung, Steuerung und/oder Regelung einer betriebstechnischen Anlage eines Gebäudes, mit einer Variante 3a des oben beschriebenen Regel- und/oder Steuergeräts 3. Die beschriebene Server-Einrichtung 4 ist hier beispielhaft in der Variante 3a des Regel- und/oder Steuergeräts ausgebildet. Die Variante 3a ist hier also einerseits mit den Feldgeräten 10.3 und 10.4 verbundenes Regel- und/oder Steuergerät und andrerseits Teil des Client-Server-Systems 4 und 5.

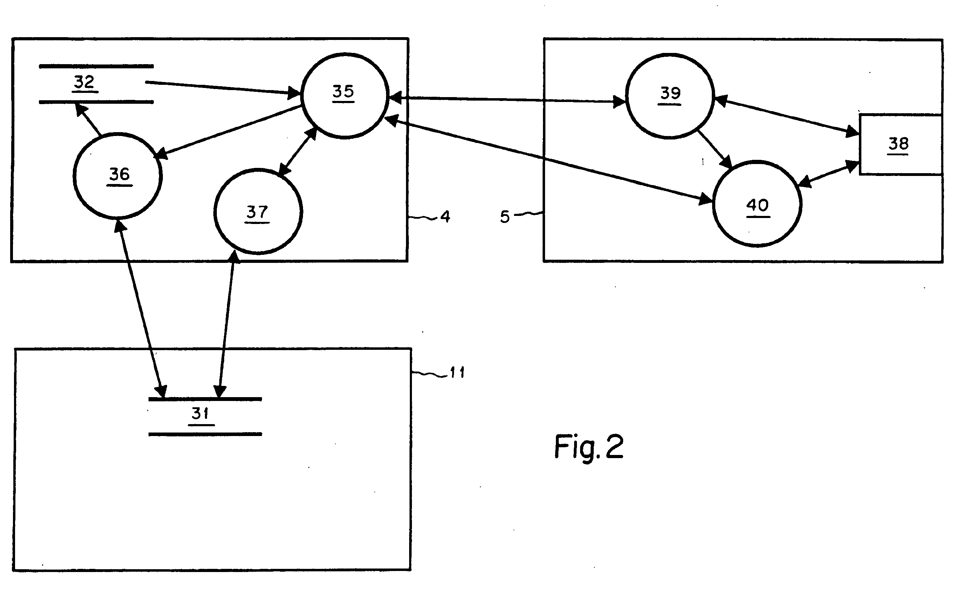

In der für die Fig. 2 gewählten, aus der Literatur bekannten Darstellungsart für Datenflussdiagramme (dazu beispielsweise D. J. Hatley, I. A. Pirbhai: Strategies for Real-Time System Specification, Dorset House, NY 1988) bedeutet ein Kreis eine Aktivität, ein Viereck ein angrenzendes System oder ein Teilsystem und ein Pfeil einen Kanal zur Übertragung von Daten und/oder Ereignissen, wobei die Pfeilspitze in die wesentliche Datenflussrichtung zeigt. Ein Datenspeicher, der allgemein mehreren Aktivitäten zur Verfügung steht, ist durch zwei gleich lange, parallele Linien dargestellt. Mit dem Begriff Datenspeicher wird hier eine Einrichtung zur Speicherung von Daten bezeichnet, welche auch Mittel zur Verhinderung von Konflikten bei zeitlich parallelem Zugriff mehrerer Aktivitäten auf die Daten aufweist. Im weiteren ist beispielsweise eine Anordnung aus zwei durch einen Kanal verbundenen Aktivitäten mit einer einzigen Aktivität, welche alle Aufgaben der besagten beiden Aktivitäten erfüllt, äquivalent. Eine Aktivität ist allgemein in mehrere über Kanäle und/oder Datenspeicher verbundene Aktivitäten zerlegbar. Weitere in der Literatur der Datenflussdiagramme benutzte Bezeichnungen sind "Terminator" für das angrenzende System oder das Teilsystem, "Process" oder "Task" für die Aktivität, "Data Flow" oder "Channel" für den Kanal und "Pool" oder "Data Pool" für den Datenspeicher.

Eine Aktivität kann als elektronische Schaltung oder auch softwaremässig beispielsweise als Prozess, Methode, Programmstück oder Routine verwirklicht werden, wobei die Aktivität bei einer softwaremässigen Ausführung auch die Zielhardware umfasst.

Um die Darstellung zu vereinfachen wird für das Datenflussdiagramm der Fig. 2 ein mit 11 bezeichneter Anlagenblock eingeführt, der auch die beiden Einheiten 2 und 3 des Regel- und/oder Steuergeräts und die Feldgeräte 10 zusammenfasst und einen ersten Datenspeicher 31 umfasst. Der erste Datenspeicher 31 der Fig. 2 weist die in der Fig. 1 dargestellten neun Datenpunkten 21 bis 29 und ihre Beschreibungsdaten sowie Beschreibungsdaten der betriebstechnischen Anlage auf. Die Beschreibungsdaten eines Datenpunkts umfassen vorteilhafterweise Adressen, hierarchische Information, Datentyp und physikalische Bedeutung des Datenpunkts.

Ein zweiter Datenspeicher 32 ist vorteilhafterweise in der Server-Einrichtung 4 (Fig. 2) angeordnet. Mit Vorteil sind Daten, durch welche der eigentliche Aufbau und die Funktionsweise der Bediensicht 30 (Fig. 1 oder Fig. 1a) beschrieben ist, im zweiten Datenspeicher 32 abgelegt. Die Server-Einrichtung 4 weist mit Vorteil eine Server-Aktivität 35, eine Engineering-Aktivität 36 und eine Zugriffs-Aktivität 37 auf.

Die Client-Einrichtung 5 weist mit Vorteil ein Ein-/Ausgabeterminal 38, eine Interpretier-Aktivität 39 und bei Bedarf auch eine weitere Engineering-Aktivität 40 auf.

Eine vorteilhafte Beschreibung der Bediensicht 30 ist durch eine im zweiten Datenspeicher 32 abgespeicherte HTML-Datei erreichbar, welche über die durch einen Standard-HTTP (HyperText Transfer Protocol)-Server verwirklichte Server-Aktivität 35 durch die als Standard-Web-Browser verwirklichte Interpretier-Aktivität 39 auf dem Ein-/Ausgabeterminal 38 wiedergegeben wird.

Während eines Verfahrens zur Generierung einer neuen Bediensicht 30, werden verschiedene Fensterdarstellungen für einen Benutzerdialog vorteilhafterweise durch die Engineering-Aktivität 40 kreiert und via Server-Aktivität 35 und Interpretier-Aktivität 39 auf dem Ein-/Ausgabeterminal 38 dargestellt.

Die Zugriff-Aktivität 37 erlaubt das Lesen der Datenpunkte 21 bis 29 und ihrer Beschreibungsdaten und auch der Beschreibungsdaten der betriebstechnischen Anlage, sowie allenfalls das verändern der Datenpunkte 21 bis 29.

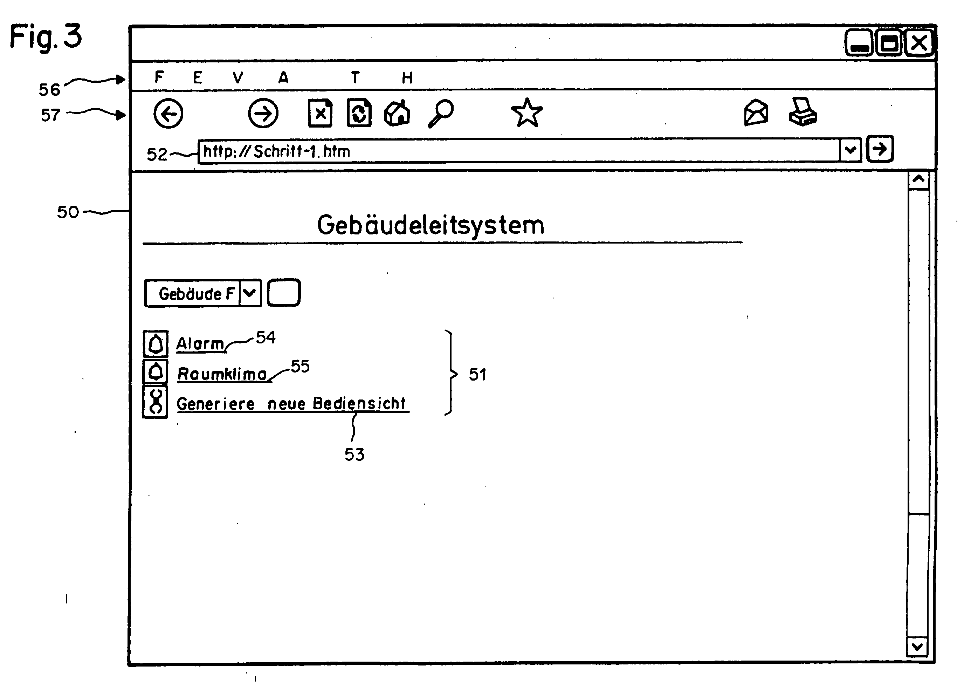

Fig. 3 zeigt eine erste beispielhafte Fensterdarstellung 50, welche auf dem Ein-/Ausgabeterminal sichtbar ist und welche vorzugsweise ein Menü 51 zur Auswahl von Befehlen aufweist. Die erste Fensterdarstellung 50 resultiert durch die Interpretation einer vorteilhafterweise in HTML geschriebenen Datei, dessen Bezeichnung oder Adresse in einer Adresszeile 52 dargestellt ist, und welche vorteilhafterweise in der Server-Einrichtung 4 im zweiten Datenspeicher 32 (Fig. 2) abgespeichert ist.

Zur Generierung einer neuen Bediensicht, wird in einem ersten Verfahrensschritt die Engineering-Aktivität 36 (Fig. 2) vorzugsweise durch Anklicken einer ersten Menüzeile 53 gestartet.

Bereits generierte Bediensichten könnten beispielsweise durch Anklicken von weiteren Menüzeilen 54 oder 55 dargestellt werden. Bei Bedarf sind bekannte Standardfunktionen des als Interpretier-Aktivität 39 eingesetzten Web-Browser-Programms aus Befehlszeilen 56 oder 57 einsetzbar.

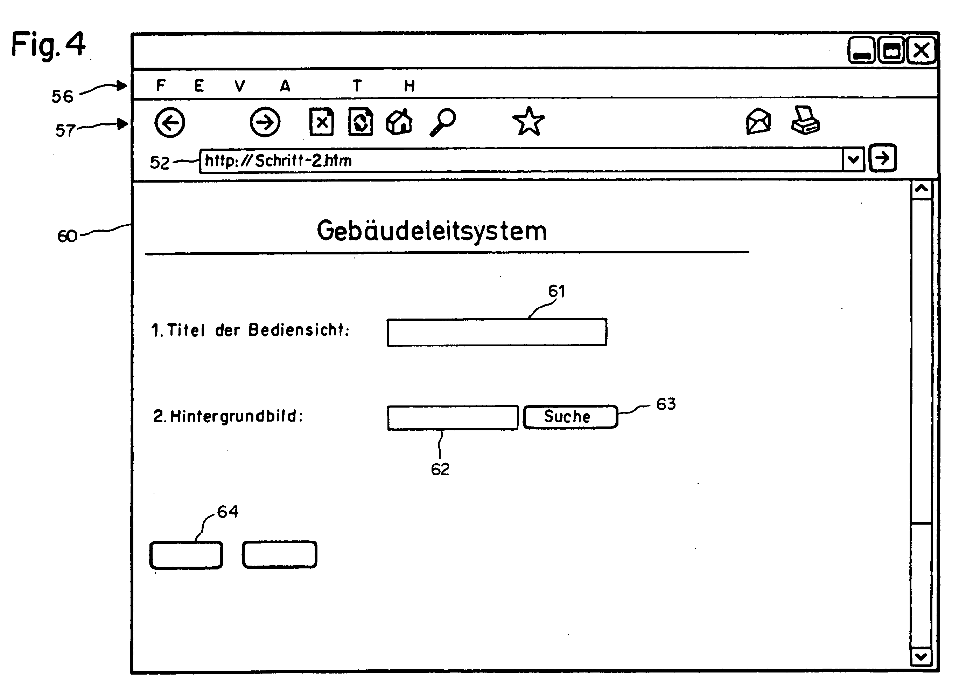

Nach dem Anklicken der ersten Menüzeile 53 wird auf dem Ein-/Ausgabeterminal 38 eine zweite beispielhafte Fensterdarstellung 60 (Fig. 4) sichtbar, welche vorteilhafterweise ein Titelfeld 61 zur Eingabe einer Titelbezeichnung für die neue Bediensicht und weiter ein Auswahlmenü 62 zur Auswahl eines Hintergrundbildes für die neue Bediensicht aufweist. Das Hintergrundbild ist vorzugsweise in einer im Auswahlmenü 62 anklickbaren Datei im zweiten Datenspeicher 32 der Server-Einrichtung 4 abgespeichert. Das Hintergrundbild zeigt beispielsweise einen Teil der Gebäudeautomatisationsanlage oder den Grundriss eines überwachten Gebäudes, kann aber auch leer sein. In einer vorteilhaften Ausführung ist auch eine Suchfunktion 63 wählbar, über welche das Hintergrundbild in der Server-Einrichtung 4 suchbar ist.

In einem zweiten Verfahrensschritt wird vom Bediener das gewünschte Hintergrundbild über das Auswahlmenü 62 oder über die Suchfunktion 63 ausgewählt. Vorteilhafterweise erstellt die Engineering-Aktivität 36 der Server-Einrichtung 4 beim Anklicken eines Softkeys 64 selbsttätig eine neue Datei mit dem Hintergrundbild und dessen Titelbezeichnung, wobei die neue Datei vorteilhafterweise in der Server-Einrichtung 4 im zweiten Datenspeicher 32 abgespeichert wird. Die neue Datei ist mit Vorteil eine in HTML geschriebene Web-Seite, welche nach dem Anklicken des Softkeys 64 selbsttätig durch die Interpretier-Aktivität 39 auf dem Ein-/Ausgabeterminal dargestellt wird. In einer vorteilhaften Implementierung ist das Hintergrundbild vorzugsweise über einen Querverweis in das neue Dokument eingefügt. Die Art des Querverweises ist vorzugsweise so, dass die Zieldatei des Querverweises derart importiert wird, dass das Gesamtbild in einem einzigen Fenster dargestellt wird, was auch unter dem Ausdruck "Embedded Document" bekannt ist. Je nach Bedarf sind in der die neue Bediensicht beschreibenden Datei Sprachkonstrukte verschiedenartiger Programmier- oder Beschreibungssprachen eingebunden, welche durch die Interpretier-Aktivität 39 ausführbar sind. Beispielhaft seinen hier Konstrukte von JavaScript oder Java genannt, beispielsweise Objekte in JavaScript oder sogenannte Java-Applets, die in ein HTML-Dokument eingebunden sind.

In weiteren Verfahrensschritten wird das gewählte statische Hintergrundbild durch die Engineering-Aktivität 36 (Fig. 2) mittels elementaren Bedienereingaben zu einer funktionsfähigen neuen Bediensicht umgeformt und dazu beispielsweise mit Text und Symbolen ergänzt und derart mit Datenpunkten verknüpft, dass aktuelle Werte und Zustände der verknüpften Datenpunkte - also sogenannte dynamische Information - in der neuen Bediensicht aussagekräftig darstellbar und in gewissen Fällen über die neue Bediensicht auch veränderbar sind.

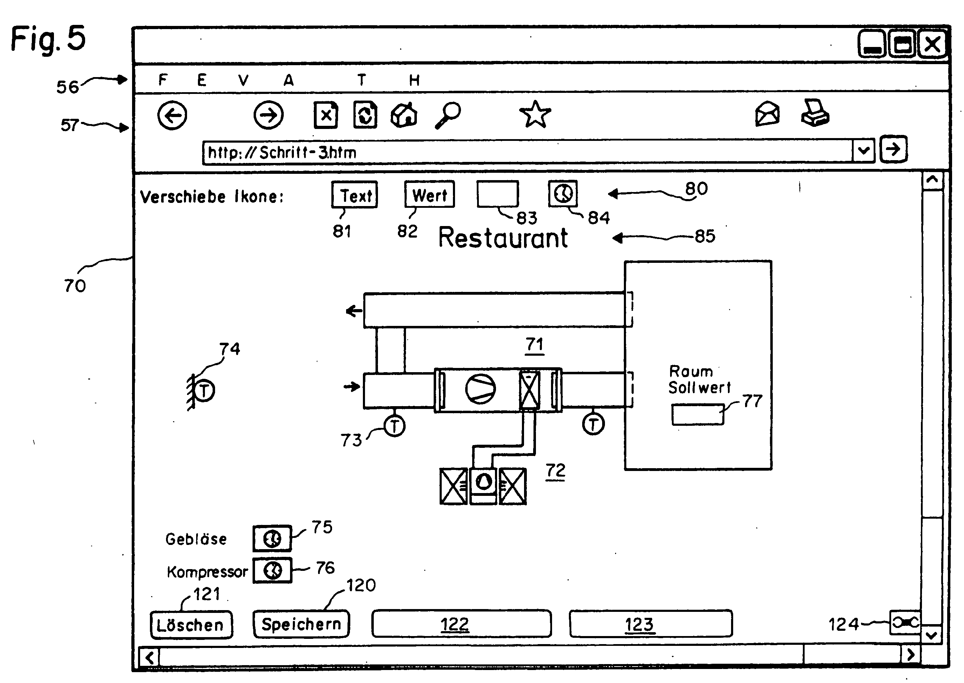

Eine Interpretation der im zweiten Verfahrenschritt generierten neuen Datei ist beispielhaft in einer dritten beispielhaften Fensterdarstellung 70 (Fig. 5) abgebildet. Das Hintergrundbild zeigt ein Schema 71 einer Heizungs-, Lüftungs- und Klimaanlage für einen Raum, mit einem Aggregat 72, einem Kanaltemperaturfühler 73, einem Aussentemperaturfühler 74, einem ersten Betriebsstundenzähler 75 für ein Gebläse, einem zweiten Betriebsstundenzähler 76 für einen Kompressor, ein Anzeigefeld 77 für einen Raumtemperatursollwert.

Vorteilhafterweise werden Objekte, mit denen die neue Bediensicht ergänzbar ist, in einer Auswahlregion 80 der dritten Fensterdarstellung 70 als Ikonen 81 bis 84 dargestellt. Mit Vorteil ist die im zweiten Verfahrensschritt gewählte Titelbezeichnung in einer Titelregion 85 der dritten Fensterdarstellung 70 eingetragen.

Anzahl und Varianten der Objekte, die für das Verfahren zur Generierung einer neuen Bediensicht zur Verfügung gestellt werden, ist im Beispiel unkritisch gewählt und kann in weiten Grenzen auf tatsächliche Bedürfnisse abgestimmt werden. Es versteht sich von selbst, dass die Objekte nicht zwingend als Ikonen verfügbar sein müssen, sondern anders, beispielsweise über eine andere Menütechnik angeboten werden. Die Ikonen 81 bis 84 sind in einer vorteilhaften Implementierung beispielsweise mit einem Cursor durch Anklicken wählbar und dann mit dem Cursor in der Bediensicht frei platzierbar. Im vorliegenden Beispiel dient eine erste Ikone 81 zur Platzierung eines Textes und eine zweite Ikone 82 zur Platzierung eines Werts, der mit einem Datenpunkt der Anlage verknüpfbar ist. Weitere Ikonen 83 und 84 dienen beispielsweise der Darstellung einer Zeit oder Schaltzeit oder zur Herstellung einer Verknüpfung auf eine gewisse Schaltzeit.

In einem dritten Verfahrensschritt wird ein gewünschtes Objekt beispielhaft durch entsprechenden Mausklick in der Auswahlregion angewählt und durch Verschieben des Objekts in einer sogenannten Drag-And-Drop-Operation am gewünschten Ort im Schema 71 platziert. Zur Durchführung der Drag-And-Drop-Operation wird vorteilhafterweise die Engineering-Aktivität 40 der Client-Einrichtung 5 eingesetzt.

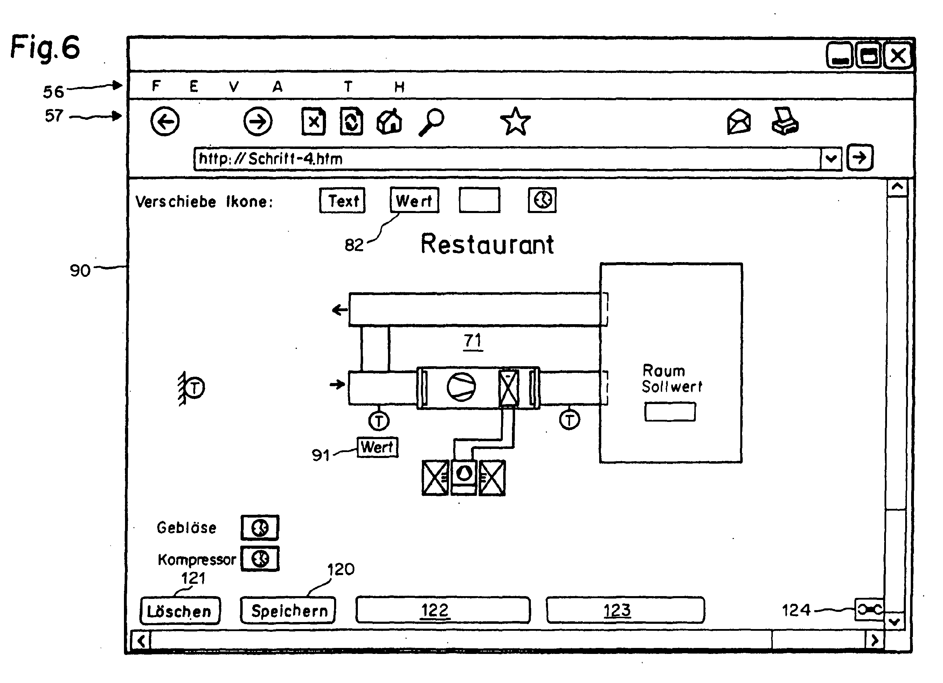

Fig. 6 zeigt eine vierte beispielhafte Fensterdarstellung 90, nachdem im dritten Verfahrensschritt ein zusätzliches Objekt 91 - nämlich ein Wert - im Schema 71 platziert worden ist.

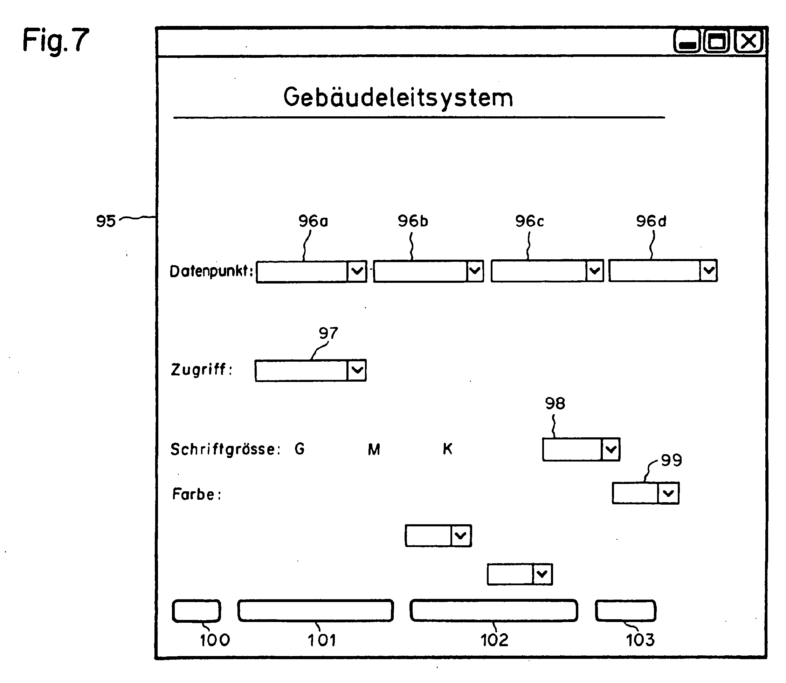

Am Ende der Drag-And-Drop-Operation, also nach dem Platzieren des Objekts wird auf dem Ein-/Ausgabeterminal 38 (Fig. 38) selbsttätig ein fünftes - vorzugsweise zusätzliches - Fenster 95 gemäss Fig. 7 dargestellt, in welches in einem vierten Verfahrensschritt zugehörige Attribute - wie eine zugehörige Datenpunktadresse, vordefinierte Werte oder Konstanten, Zugriffsart, Darstellungsgrösse oder Farbe - zu dem im dritten Verfahrensschritt platzierten Objekt festgelegt werden.

Zur Festlegung der Attribute weist das Fenster 95 mit Vorteil Auswahlfelder 96a bis 96d auf, durch welche ein gewünschter Datenpunkt aus der Menge der in der Anlage vorhandenen Datenpunkte 21 bis 29 (Fig. 1) auswählbar ist. Durch Strukturierung und Beschriftung der Auswahlfelder 96a bis 96d kann die Menge der in der Anlagen vorhandenen Datenpunkte 21 bis 29 für das Bedienpersonal übersichtlich verfügbar gemacht werden, ohne dass Detailwissen, beispielsweise über Adressvergaberegeln, notwendig wäre.

Beispielhaft wird das zusätzliche Objekt 91 mit einem Datenpunkt verknüpft, indem im vierten Verfahrensschritt vom Service-Personal im Auswahlfeld 96 der gewünschte Kanaltemperaturfühler 73 gesucht und angeklickt wird, der beispielhaft den fünften Datenpunkt 25 (Fig. 1) darstellt.

In einem weiteren Auswahlfeld 97 ist die gewünschte Zugriffart - beispielsweise "Nur Lesen" oder "Lesen und Verändern" - für den ausgewählten Datenpunkt setzbar. Mit Vorteil weist das Fenster 95 zusätzliche Auswahlfelder 98 und 99 beispielsweise zum Festelegen von Schriftgrösse und Schriftfarbe für das platzierte Objekt auf.

Mit Vorteil weist das Fenster 95 auch Befehlszeilen oder Softkeys 100 bis 103 drei auf. Beispielhaft dient ein erster Softkey 100 zum Abschliessen der aktuellen Aktion, ein zweiter Softkey 101 zum Setzen von vordefinierten Werten oder Konstanten, ein dritter Softkey 102 zum Löschen des aktuell bearbeiteten Objekts und ein vierter Softkey 103 zum Rückgängigmachen der aktuellen Aktion.

Nach dem Anklicken des ersten Softkeys 100 ist das Objekt 91 definiert, das Fenster 95 wird damit geschlossen.

In der Regel wird eine Sequenz mit dem dritte Verfahrensschritt und dem vierten Verfahrensschritt wiederholt durchgeführt, bis alle gewünschten Objekte im Hintergrundbild angeordnet, mit den notwendigen Attributen versehen und damit allenfalls mit den zugehörigen Datenpunktadressen verknüpft sind.

Wenn alle gewünschten Objekte im Hintergrund angeordnet und mit den notwendigen Attributen versehen und damit allenfalls mit den zugehörigen Datenpunktadressen der Anlage verknüpft sind, wird in einem fünften Verfahrensschritt durch Aktivieren eines in der dritten und vierten Fensterdarstellung 70 bzw. 90 (Fig. 5 bzw. Fig. 6) verfügbaren Softkeys 120 die der Code der neue Bediensicht durch die Engineering-Aktivität 36 (Fig. 2) selbsttätig vervollständigt und wenigstens eine neue Datei mit der vollständigen Beschreibung der neuen Bediensicht im zweiten Datenspeicher 32 in der Server-Einrichtung 4 abgespeichert.

Mit Vorteil sind in der dritten und vierten Fensterdarstellung 70 bzw. 90 (Fig. 5 bzw. Fig. 6) weitere Bedienmittel 121 bis 124 zur Auswahl und Auslösung von nützlichen Editierfunktionen verfügbar. Beispielhaft weisen die beiden Bediensichten 70 und 90 ein erstes Bedienmittel 121 zum löschen der aktuellen Bediensicht, ein zweites Bedienmittel 122 zum Entfernen aller platzierten Objekte der aktuellen Bediensicht, ein drittes Bedienmittel 123 zum Festlegen eines Dateinamens für die aktuelle Bediensicht und ein viertes Bedienmittel 124 zum Verändern des Hintergrundbildes auf. Die Bedienmittel 121 bis 124 sind beispielhaft durch Softkeys implementierbar.

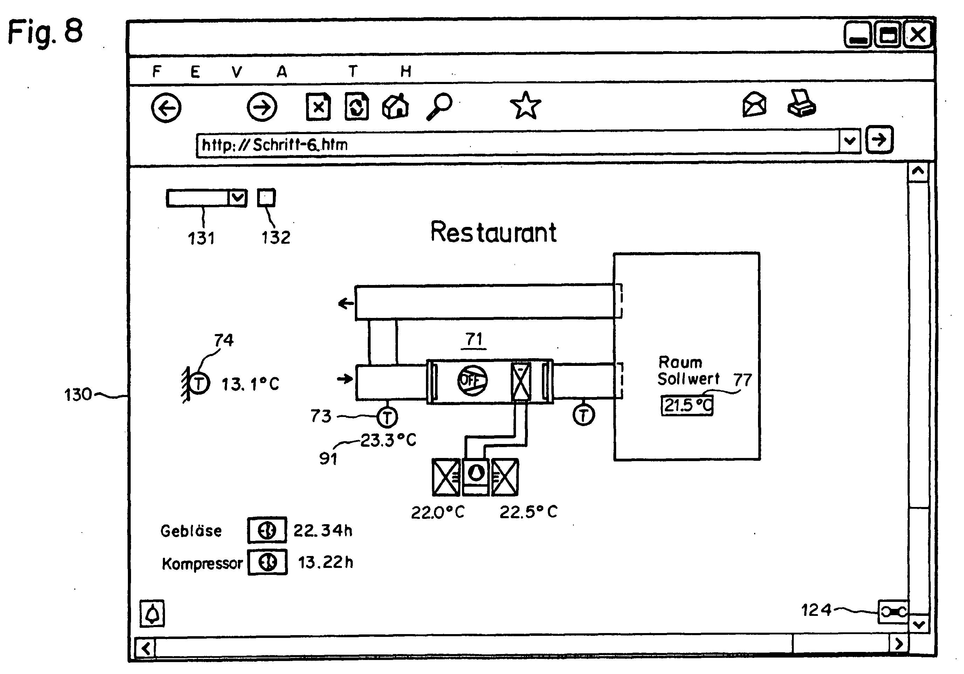

In der Fig. 8 ist eine beispielhafte sechste Fensterdarstellung 130 mit der durch die Interpretier-Aktivität 39 (Fig. 2) auf dem Ein-/Ausgabeterminal 38 dargestellten neuen Datei mit der Beschreibung der neuen Bediensicht, welche mit den oben beschriebenen fünf Verfahrensschritten 1 bis 5 generierbar ist.

In der neuen Bediensicht sind aktuelle Werte von Prozessgrössen eingetragen, die durch die Zugriffs-Aktivität 37 (Fig. 2) der Server-Einrichtung 4 im Anlagenblock 11 selbsttätig erfasst werden. Das mit dem fünften Datenpunkt 25 (Fig. 1) bzw. dem Temperaturfühler 10.1 verknüpfte Objekt 91 zeigt den vom Temperaturfühler 10.1 aktuell gemessenen Wert 23,3°C. Das in einer Wiederholung des dritten und vierten Verfahrensschrittes beispielhaft dem ersten Datenpunkt 21 zugeordnete Anzeigefeld 77 zeigt den Raumsollwert für das Regel- und/oder Steuergerät 2 von 21.5°C. Der im Anzeigefeld 77 dargestellte Raumsollwert kann bei Bedarf durch das Service-Personal direkt über die Bediensicht geändert werden, indem der Wert im Anzeigefeld 77 entsprechend geändert wird. Mit Vorteil ist die Bediensicht so programmiert, dass das Service-Personal zum Ändern von Werten bekannte Techniken - wie beispielsweise Auswählen des Feldes durch Anklicken und anschliessendes Eingeben des neuen Wertes - benutzen kann.

Mit Vorteil weist die sechste Fensterdarstellung 130 ein Auswahlfeld 131 und einen Aktivierungsknopf 132 zur Auswahl und zum Starten weiterer bereits vorhandener Bediensichten auf. Ein Aktivieren des Bedienmittels 124 führt zurück zum dritten Verfahrensschritt, wobei vorteilhafterweise die vierte Fensterdarstellung 90 dargestellt wird, mit der das Verfahren zum Generieren der neuen Bediensicht fortgesetzt werden kann.

Dadurch, dass die Server-Einrichtung 4 über aktuelle Informationen des Gebäudeleitsystems verfügt, also Information über vorhandene Datenpunkte, deren Wert oder Zustand sowie Information über den Aufbau und die Komponenten der Anlage, kann durch die Kombination der durch die Server-Einrichtung 4 an die Client-Einrichtung 5 gelieferten Engineering-Aktivität 36 und der dynamischen Dateigenerierung der Server-Einrichtung 4 eine benutzergerechte grafische Bedienoberfläche sehr einfach direkt mit der Anlage generiert werden. Dadurch wird ermöglicht, dass ein Vorgang, welcher bis anhin nur durch aufwändig geschultes Personal durchgeführt werden konnte, nun auch ohne Spezialwissen durchgeführt werden kann.

## Patentansprüche

1. Verfahren zur Generierung einer Bediensicht für eine Benutzerschnittstelle einer Einrichtung zur Steuerung und/oder Regelung von Prozessgrössen, mit
- einer Steuer- und/oder Regeleinrichtung (2, 3, 7, 8, 10),
- einer Server-Einrichtung (4) und
- einer über einen Kommunikationskanal (6) mit der Server-Einrichtung (4) verbundene Client-Einrichtung (5),
- wobei die Server-Einrichtung (4) einen Datenspeicher (32), und eine Aktivität (35; 36; 37) aufweist, und
- wobei die Client-Einrichtung (5) eine Aktivität (39; 40) und ein Ein-/Ausgabe-Terminal (38) für die Benutzerschnittstelle (130) aufweist, und
- wobei die Client-Einrichtung (5) und die Server-Einrichtung (4) derart ausgebildet und über den Kommunikationskanal (6) verbunden sind, dass sie zusammen ein sogenanntes Client-Server-System (5, 6, 4) bilden,
mit
- einem Verfahrensschritt, in welchem über die Client-Einrichtung (5) ein Hintergrundbild (71) auswählbar ist und am Ein-/Ausgabe-Terminal (38) dargestellt wird,
- einem Verfahrensschritt, in welchem ein Datenpunkt (21, 22 bis 29) der Steuer- und/oder Regeleinrichtung (2, 3, 7, 8, 10) am Ein-/Ausgabe-Terminal (38) auswählbar dargestellt wird und in dem am Ein-/Ausgabe-Terminal (38) dargestellten Hintergrundbild (71) eingefügt wird, wobei über die Server-Einrichtung (4) eine von einem Computer lesbare Beschreibung (31) des aktuellen Aufbaus und der vorhandenen Datenpunkte (21 bis 29) der Steuer- und/oder Regeleinrichtung (2, 3, 7, 8 10) zugreifbar und für die Client-Einrichtung zum Lesen verfügbar ist,
- einem Verfahrensschritt, in welchem das Client-Server-System (5, 4, 6) aus einem das Hintergrundbild (71) beschreibenden Datensatz eine die Bediensicht (130) beschreibende Datei (32) generiert, wobei die Bediensicht (130; 30) einen im Hintergrundbild (71) eingetragenen und von einem Bediener ausgewählten Datenpunkt (21 bzw. 25) darstellt, und
- einem Verfahrensschritt, in welchem der aktuelle Zustand oder Wert des vom Bediener ausgewählten Datenpunktes (21, 22 bis 29) durch das Client-Server-System (5, 4, 6) selbsttätig gelesen und in der am Ein-/Ausgabe-Terminal (38) dargestellten Bediensicht (130; 30) optisch dargestellt wird.

2. Verfahren nach Anspruch 1, **gekennzeichnet durch** einen Verfahrensschritt, in welchem der Zustand oder Wert eines in der Bediensicht (130; 30) auswählbaren Datenpunktes (21, 22 bis 29) der Steuer- und/oder Regeleinrichtung (2, 3, 7, 8, 10) über die Bediensicht (130; 30) verändbar ist.

3. Verfahren nach einem vorangehenden Anspruch, **dadurch gekennzeichnet, dass** ein ausgewählter Datenpunkt (21, 22 bis 29) durch sogenannte Drag-And-Drop Bedienung auf dem Hintergrundbild (71) verschiebbar ist.

## Claims

1. Method for generating an operating view for a user interface of an apparatus for controlling and/or regulating process parameters, comprising
- a control and/or regulating arrangement (2, 3, 7, 8, 10),
- a server device (4), and
- a client device (5) connected to the server device (4) by way of a communication channel (6),
- wherein the server device (4) has a data store (32) and an activity (35; 36; 37), and
- wherein the client device (5) has an activity (39; 40) and an input/output terminal (38) for the user interface (130), and
- wherein the client device (5) and the server device (4) are configured and connected by way of the communication channel (6) in such a way that together they form a so-called client server system (5, 6, 4),
comprising
- a method step in which a background image (71) can be selected by way of the client device (5) and represented at the input/output terminal (38),
- a method step in which a data point (21, 22 to 29) of the control and/or regulating arrangement (2, 3, 7, 8, 10) is represented in a selectable manner at the input/output terminal (38) and inserted in the background image (71) represented at the input/output terminal (38), wherein a computer-readable description (31) of the current structure and the data points (21 to 29) of the control and/or regulating arrangement (2, 3, 7, 8, 10) present can be accessed by way of the server device (4)and is available to the client device for reading,
- a method step in which the client server system (5, 4, 6) generates a file (32) describing the operating view (130) from a data set describing the background image (71), wherein the operating view (130; 30) represents a data point (21 or 25 respectively) which is input in the background image (71) and selected by an operator, and
- a method step in which the current state or value of the data point (21, 22 to 29) selected by the operator is automatically read by the client server system (5, 4, 6) and optically represented in the operating view (130; 30) represented at the input/output terminal (38).

2. Method according to claim 1, **characterised by** a method step in which the state or value of a data point (21, 22 to 29), which can be selected in the operating view (130; 30), of the control and/or regulating arrangement (2, 3, 7, 8, 10), can be modified by way of the operating view (130; 30).

3. Method according to a preceding claim **characterised in that** a selected data point (21, 22 to 29) can be displaced by a so-called drag-and-drop operation on the background image (71).

## Revendications

1. Procédé pour générer un visuel de commande pour une interface utilisateur d'un dispositif de commande et/ou de réglage de grandeurs de processus, comprenant
- un dispositif de commande et/ou de réglage (2, 3, 7, 8, 10),
- un dispositif serveur (4) et
- un dispositif client (5) relié au dispositif serveur (4) par l'intermédiaire d'un canal de communication (6),
- le dispositif serveur (4) comportant une mémoire de données (32) et une activité (35; 36; 37) et
- le dispositif client (5) comportant une activité (39; 40) et un terminal d'entrée / sortie (38) pour l'interface utilisateur (130) et
- le dispositif client (5) et le dispositif serveur (4) étant réalisés et reliés de manière telle par l'intermédiaire du canal de communication (6) qu'ils constituent ensemble ce qu'on appelle un système client / serveur (5, 6, 4),
avec
- une étape du procédé dans laquelle une image de fond (71) peut être sélectionnée via le dispositif client (5) et est représentée sur le terminal d'entrée / sortie (38),
- une étape du procédé dans laquelle un point de données (21, 22 à 29) du dispositif de commande et/ou de réglage (2, 3, 7, 8, 10) est représenté de manière sélectionnable sur le terminal d'entrée / sortie (38) et est inséré dans l'image de fond (71) représentée sur le terminal d'entrée / sortie (38), une description (31), lisible par un ordinateur, de l'architecture actuelle et des points de données présents (21 à 29) du dispositif de commande et/ou de réglage (2, 3, 7, 8, 10) pouvant être accédée et étant disponible pour lecture pour le dispositif client via le dispositif serveur (4),
- une étape du procédé dans laquelle le système client / serveur (5, 4, 6) génère un fichier (32) décrivant le visuel de commande (130) à partir d'un jeu de données décrivant l'image de fond (71), le visuel de commande (130; 30) représentant un point de données (21 resp. 25) inscrit dans l'image de fond (71) et sélectionné par un opérateur et
- une étape du procédé dans laquelle l'état ou la valeur actuels du point de données (21, 22 à 29) sélectionné par l'opérateur sont lus automatiquement par le système client / serveur (5, 4, 6) et représentés optiquement dans le visuel de commande (130; 30) représenté sur le terminal d'entrée / sortie (38).

2. Procédé selon la revendication 1, **caractérisé par** une étape dans laquelle l'état ou la valeur d'un point de données (21, 22 à 29) du dispositif de commande et/ou de réglage (2, 3, 7, 8, 10), sélectionnable dans le visuel de commande (130; 30) sont modifiables via le visuel de commande (130; 30).

3. Procédé selon une revendication précédente, **caractérisé en ce qu'**un point de données (21, 22 à 29) sélectionné peut être déplacé sur l'image de fond (71) par une commande dite de «drag and drop».
